# EUROPEAN PATENT APPLICATION

(11) **EP 0 682 308 A1**
(43) Date of publication of application: **15.11.1995**
(21) Application number: 95303114.3
(22) Date of filing: 09.05.1995
(51) Int. Cl.: G06F 7/48

(54) **Digital operation unit**

(30) Priority: 09.05.1994 KR 9410095
(71) Applicant: Samsung Electronics Co., Ltd., Suwon-city, Kyungki-do 441-370 (KR)
(72) Inventor: Lee, Bang-Won, 206-302, Dongah Apt., Sungnam-City, Kyungki-do (KR); Lim, Young-heon, 202-1212, Wooman Jugong Apt., Suwon-city, Kyungki-do (KR)
(74) Representative: Lawrence, Richard Anthony

(57) **Abstract**

A digital operation unit includes an arithmetic logic unit (100) for executing arithmetic and logical operations by receiving data via first and second input ports (84, 85), a plurality of registers (200 a-d) for storing operation results of the arithmetic logic unit, a plurality of first switching means (81 a-d) connected between the arithmetic logic unit and the plurality of registers for controlling the transmission of data, a plurality of second switching means (83 a-d) connected between the plurality of registers and the first input port of the arithmetic logic unit for controlling the transmission of data, and a plurality of third switching means (84 a-d) connected between the plurality of registers and the second input port of the arithmetic logic unit for controlling the transmission of data. The digital operation unit can execute variety of complex arithmetic and logical operations easily without the assistance of an external memory and can reduce the data shifting, thereby improving the overall operation speed.

## Description

The present invention relates to a digital signal processor, and more particularly, to a digital operation unit using multiple registers.

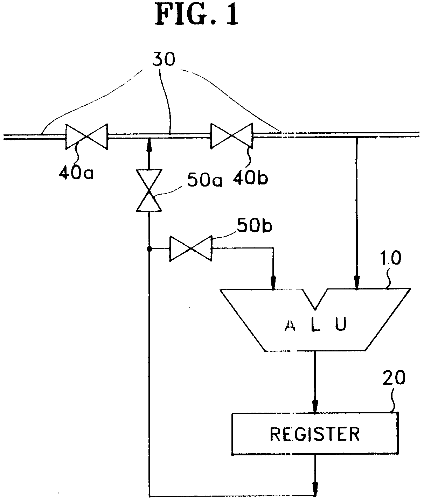

In general, a digital operation unit includes an arithmetic logic unit and a register. FIG. 1 is a block diagram for explaining the structure of a conventional digital operation unit which is constituted by an arithmetic logic unit (ALU) 10 for executing arithmetic and logical operations, a register 20 for storing output data of ALU 10, a bus 30 for transmitting data, switches 40a and 40b for controlling a data transmission of bus 30, and switches 50a and 50b for controlling the transmission of data output from register 20.

The data output from ALU 10 of the conventional digital operation unit is only stored in a single register 20. Therefore, in order to execute further operations using the data output by result of the operation of ALU 10, an external memory (not shown) connected to bus 30 is necessary. That is to say, in order to execute variety of complex arithmetic and logical operations, the frequent data shift from/to an external memory is necessary, thereby lowering the overall operation speed.

It is an object of the present invention to provide a digital operation unit for executing complex arithmetic and logical operation easily without a data shift from/to external memory.

To accomplish the above object, the digital operation unit according to the present invention comprises: an arithmetic logic unit for executing arithmetic and logical operations by receiving two data via first and second input ports; a plurality of registers for storing operation results of the arithmetic logic unit; a plurality of first switching means connected between the arithmetic logic unit and the plurality of registers for controlling the transmission of data; a plurality of second switching means connected between the plurality of registers and the first input port of the arithmetic logic unit for controlling the transmission of data; and a plurality of third switching means connected between the plurality of registers and the second input port of the arithmetic logic unit for controlling the transmission of data.

A specific embodiment of the invention is described below, by way of example, with reference to the accompanying drawings, in which:
FIG. 1 is a block diagram for explaining the structure of a conventional digital operation unit; and
FIG. 2 is a block diagram for explaining the structure of a digital operation unit according to the present invention.

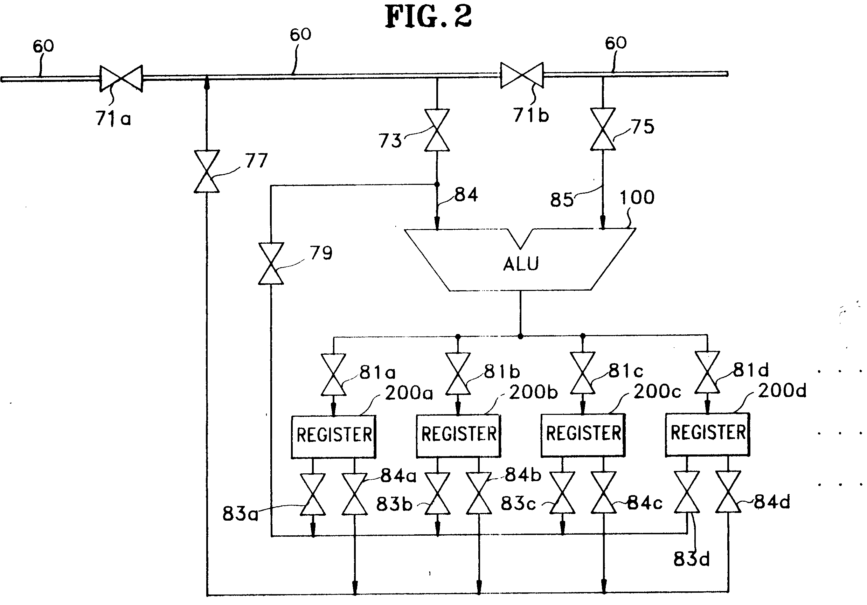

The digital operation unit shown in FIG. 2 includes an arithmetic logic unit 100 for executing arithmetic and logical operations, registers 200a, 200b, 200c and 200d for storing operation results of arithmetic logic unit 100; switches 81a, 81b, 81c and 81d each connected between ALU 100 and registers 200a, 200b, 200c and 200d for controlling the transmission of data output from ALU 100; switches 83a, 83b, 83c and 83d each connected between a first input port 84 of ALU 100 and registers 200a, 200b, 200c and 200d for controlling the transmission of data output from registers 200a, 200b, 200c and 200d, switches 84a, 84b, 84c and 84d each connected between a bus 60 and registers 200a, 200b, 200c and 200d for controlling the transmission of data output from registers 200a, 200b, 200c and 200d, switches 71a and 71b for controlling the transmission of data via bus 60, switches 73 and 75 each connected between a bus 60 and first and second input ports of ALU 100; a switch 79 connected between switches 83a, 83b, 83c and 83d and first input port 84 of ALU 100, and a switch 77 connected between a bus 60 and switches 84a, 84b, 84c and 84d. Here, in the place of switches 77 and 79, switches 83a, 83b, 83c and 83d may be directly connected to first input port 84 of ALU 100, and switches 84a, 84b, 84c and 84d may be directly connected to bus 60. In the above constitution, the respective switches 71a, 71b, 73, 75, 77, 79, 81a to 81d, 83a to 83d, and 84a to 84d are constituted by CMOS transmission gates and their on/off operations are determined according to an external control signal (not shown). Also, the operation type of ALU 100 is selected according to the external control signal.

First, the operation with respect to data input from bus 60 and data stored in register 200a, for example, will now be described.

If switches 83a and 79 are turned on, the data of register 200a is input to first input port 84 of ALU 100 through switch 83a to switch 79. If switches 71a, 71b and 75 are turned on, the data is input to second input port 85 of ALU 100 through bus 60 to switch 71a, to switch 71b and to switch 75. At this time, ALU 100 executes operations with respect to two input data and the operation type thereof is selected according to an external control signal (not shown). Subsequently, the operation results of ALU 100 are stored in one or more registers by controlling switches 81a, 81b, 81c and 81d.

Next, the operation with respect to data respectively stored in registers 200a and 200b will now be described.

If switches 83a and 79 are turned on, the data stored in register 200a is input to first input port 84 of ALU 100 through switch 83a to switch 79. If switches 84b, 77, 71b and 75 are turned on, the data stored in register 200b is input to second input port 85 of ALU 100 through switch 84b to switch 77 to bus 71b and to switch 75. At this time, ALU 100 executes an arithmetic or logic operation with respect to the input data input through first and second input ports 84 and 85.

As described above, the digital operation unit according to the present invention can easily execute a variety of complex arithmetic and logical operations without assistance of an external memory, by adopting a plurality of registers to control the transmission of data stored in the respective registers. Therefore, data shifting is reduced, thereby improving the overall operation speed.

## Claims

1. A digital operation unit comprising:
an arithmetic logic unit for executing arithmetic and logical operations by receiving data via both a first and a second input port;
a plurality of registers for storing operation results of said arithmetic logic unit;
a plurality of first switching means connected between said arithmetic logic unit and said plurality of registers for controlling the transmission of data;
a plurality of second switching means connected between said plurality of registers and said first input port of said arithmetic logic unit for controlling the transmission of data; and
a plurality of third switching means connected between said plurality of registers and said second input port of said arithmetic logic unit for controlling the transmission of data.

2. A digital operation unit as claimed in claim 1, further comprising fourth switching means connected between said plurality of second switching means and said first input port of said arithmetic logic unit for controlling the transmission of data and fifth switching means connected between said plurality of third switching means and said second input port of said arithmetic logic unit for controlling the transmission of data.

3. A digital operation unit as claimed in claim 1, wherein said plurality of first switching means are constituted by CMOS transmission gates.

4. A digital operation unit as claimed in claim 1, wherein said plurality of second switching means are constituted by CMOS transmission gates.

5. A digital operation unit as claimed in claim 1, wherein said plurality of third switching means are constituted by CMOS transmission gates.

6. A digital operation unit as claimed in claim 2, wherein said fourth and fifth switching means are constituted by CMOS transmission gates.

7. A digital operation unit comprising:
a bus for transmitting data;
sixth switching means for controlling the transmission of data via said bus;
seventh and eighth switching means for controlling the transmission of data via said bus and the data transmission-controlled by said sixth switching means;
an arithmetic logic unit for executing arithmetic and logical operations by receiving two data via third and fourth input ports connected to said seventh and eighth switching means, respectively;
a plurality of registers for storing operation results of said arithmetic logic unit;
ninth switching means connected between said arithmetic logic unit and said plurality of registers for controlling the transmission of data;
tenth switching means connected between said plurality of registers and said third input port of said arithmetic logic unit for controlling the transmission of data; and eleventh switching means connected between said
plurality of registers and said bus for controlling the transmission of data.
